(19) Europäisches Patentamt
European Patent Office
Office européen des brevets

(11) **EP 2 632 012 B1**

(12) **EUROPÄISCHE PATENTSCHRIFT**

(45) Veröffentlichungstag und Bekanntmachung des Hinweises auf die Patenterteilung:
**17.02.2016 Patentblatt 2016/07**

(51) Int Cl.:
***H02J 3/40*** *(2006.01)*

(21) Anmeldenummer: **12156495.9**

(22) Anmeldetag: **22.02.2012**

(54) **Verfahren zum Synchronisieren einer Einspeisespannung mit einer Netzspannung**

Method for synchronising a feed-in voltage with a mains voltage

Procédé de synchronisation d'une tension d'alimentation ayant une tension réseau

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.08.2013 Patentblatt 2013/35**

(73) Patentinhaber: **Siemens Aktiengesellschaft 80333 München (DE)**

(72) Erfinder:
• **Benesch, Norbert, Dr. 90562 Heroldsberg (DE)**
• **Namyslo, Lutz 91353 Hausen (DE)**

(56) Entgegenhaltungen:
**DE-A1-102010 001 333    DE-B3-102006 059 199**

**Beschreibung**

Die Erfindung betrifft ein Verfahren zum Erhalten einer Netzspannung in einem elektrischen Energieversorgungsnetz, eine Steuervorrichtung zur Durchführung des Verfahrens, einen Netzbildner zum Erhalten einer Netzspannung in einem elektrischen Energieversorgungsnetz und ein elektrisches Energieversorgungsnetz mit dem Netzbildner.

Elektrische Energieversorgungsnetze mit Netzbildern zum Erhalten einer Netzspannung in dem elektrischen Energieversorgungsnetz sind beispielsweise aus der DE 102 10 099 A1 bekannt. Jede Spannung ist gekennzeichnet durch eine Form, die beispielsweise den Effektivwert, die Frequenz und die Phasenlage umfassen kann.

DE 10 2006 059 199 B3 zeigt ein Verfahren zum Synchronisieren einer Einspeisespannung entsprechend des einleitenden Teils von Anspruch 1.

Es ist Aufgabe der Erfindung, die Erhaltung einer Netzspannung in einem elektrischen Energieversorgungsnetz zu verbessern.

Die Aufgabe wird durch die Merkmale der unabhängigen Ansprüche gelöst. Die abhängigen Ansprüche enthalten bevorzugte Weiterbildungen der Erfindung.

Der Erfindung liegt die Überlegung zugrunde, dass Blackstarts oder Schwarzstarts genannte Wiederanläufe in elektrischen Energieversorgungsnetzen in dezentralen elektrischen Energieversorgungsnetzen, Inselnetze genannt, eine besondere Herausforderung darstellen. Unter einem Schwarzstart wird nachstehend die Fähigkeit des Inselnetzes verstanden, von einem abgeschalteten Zustand aus eine gemeinsame Netzspannung aufzubauen und zu erhalten. Dazu müssen während des Schwarzstarts alle an das Inselnetz angeschlossenen Netzbildner einen gemeinsamen Arbeitspunkt zum Aufbau einer stabilen Netzspannung finden.

Ferner liegt der Erfindung die Überlegung zugrunde, dass in einem elektrischen Energieversorgungsnetz zwischen Netzbildnern und Netzstützern unterschieden wird. Netzstützer speisen dabei in erster Näherung unabhängig vom Zustand des Netzes eine verfügbare Leistung in das elektrische Energieversorgungsnetz ein und wirken damit als Stromquelle. Demgegenüber beteiligen sich Netzbildner an der Regelung der Netzspannung und wirken so als Spannungsquelle. Dabei ist die aktuell abgegebene Leistung abhängig von der zu diesem Zeitpunkt vom elektrischen Energieversorgungsnetz abgerufenen elektrischen Leistung. In einem elektrischen Energieversorgungsnetz muss mindestens ein Netzbildner vorhanden sein. Ein stabiler Betrieb mehrerer Netzbildner in einem elektrischen Energieversorgungsnetz erfolgt bevorzugt mit Hilfe einer sogenannten Statikkennlinie, die eine vom elektrischen Energieversorgungsnetz abgerufene elektrische Leistung der Netzspannung gegenüberstellt. Jeder Netzbildner im Inselnetz ermittelt mit Hilfe dieser Statikkennlinien seine aktuelle einzuspeisende Spannung. Ein im elektrischen Energieversorgungsnetz aufeinander abgestimmter Arbeitspunkt zwischen mehreren Netzbildnern ist erreicht, wenn alle Netzbildner eine gleiche einzuspeisende Spannung abgeben.

Darüber hinaus liegt der Erfindung die Überlegung zugrunde, dass es am günstigsten wäre, zunächst einen einzigen Netzbildner die Netzspannung vorgeben zu lassen, und die restlichen Netzbildner dann zum elektrischen Energieversorgungsnetz dazu zu schalten. Inselnetze zeichnen sich jedoch durch eine geringe Hierarchie aus. Die Netzbildner können hier nur gemeinsam mit den Verbraucherlasten verschaltet werden. Zwar könnte hier dennoch ein einzelner Netzbildner zunächst die Netzspannung vorgeben, durch die angeschlossenen Verbraucher kann die während des Schwarzstarts vorhandene Verbraucherlast für diesen einzelnen Netzbildner zu groß sein, um die Netzspannung zu erzeugen. Dies kann nur dadurch gelöst werden, dass der Schwarzstart gemeinsam mit mindestens zwei koordinierten Netzbildnern erfolgt. Diese Koordination könnte asynchron erfolgen, wobei sich jeder der zu koordinierenden Netzbildner anhand ihrer eigenen aktuell in das elektrische Energieversorgungsnetz eingespeisten Leistung über die Statikkennlinie die in das Netz einzuspeisende Spannung berechnen.

Der Erfindung liegt jedoch die Erkenntnis zugrunde, dass sich auf dem asynchronen Weg eine gemeinsame Netzspannung nicht einstellen lässt, wenn einer der koordinierten Netzbildner auf seiner Statikkennlinie den anderen Netzbildnern nicht schnell genug folgen kann. Dies soll beispielhaft an Netzbildnern erklärt werden, die eine Stromgrenze besitzen, die sie nicht überschreiten können. Da Netzbildner wie bereits erwähnt als Spannungsquellen arbeiten müssten sie fähig sein unendlich hohe Ströme abzugeben, was in der Praxis jedoch nicht der Fall ist. An Punkten auf der Statikkennlinie mit sehr niedrigen Spannungen müssen die Netzbildner hohe Leistungsflüsse in das elektrische Energieversorgungsnetz durch entsprechend hohe Ströme ausgleichen. Kann er den entsprechend hohen Strom nicht aufbringen, bleibt seine eigene aktuell in das elektrische Energieversorgungsnetz eingespeiste Leistung und damit seine in das elektrische Energieversorgungsnetz einzuspeisende Spannung konstant, so dass er auf einem Punkt der Statikkennlinie stehen bleibt und sich nicht mehr weiter bewegt. In der Folge können die zu koordinierenden Netzbildner keine gemeinsame Netzspannung aufbauen.

Das Problem könnte zwar auf synchronem Weg gelöst werden, indem ein gemeinsamer Master die Sollwerte für die Netzspannung hart vorgibt. Auf diese Weise könnte vermieden werden, dass den Netzbildnern aufgrund zu kleiner temporärer Netzspannungen zu große Ströme abverlangt werden. Jedoch müsste jeder einzelne Netzbildner mit dem Master verbunden sein, die gerade bei räumlich über mehrere Kilometer verteilten Netzbildnern zu erheblichen Kosten, einer hohen Störanfälligkeit und damit zu einer unzureichenden Verfügbarkeit führen kann.

Demgegenüber ist es Idee der Erfindung, den auf seiner Statikkennlinie stehengebliebenen Netzbildner zu bewegen, und quasi einen Schubs zu geben, so dass er sich wieder auf seiner Statikkennlinie bewegen kann. Dies wird dadurch erreicht, dass wenn der Netzbildner auf seiner Statikkennlinie stehen geblieben ist, er auf einen neuen Punkt auf der Statikkennlinie verschoben wird, aus dem er für die abzugebende Leistung einen Strom unterhalb seiner Stromgrenze abgeben muss. Somit kann er durch den nun wieder variablen Ausgangsstrom seine an das elektrische Energieversorgungsnetz abzugebende Leistung erhöhen und sich frei auf der Statikkennlinie bewegen.

Die Erfindung gibt daher ein Verfahren zum Synchronisieren einer Einspeisespannung mit einer Netzspannung eines elektrischen Energieversorgungsnetzes an wobei eine Eigenschaft der Einspeisespannung basierend auf einer Statikkennlinie bestimmbar ist, wobei die Statikkennlinie die Eigenschaft der Einspeisespannung einer Einspeiseleistung gegenüberstellt, wobei die Einspeiseleistung durch das elektrische Energieversorgungsnetz bei der angelegten Einspeisespannung aufgenommen wird, und wobei die Eigenschaft der Einspeisespannung an einen bestimmten Wert angepasst wird, wenn eine Grenze für die Einspeiseleistung erreicht ist. Die Eigenschaften der Einspeisespannung beziehungsweise der Netzspannung sind beispielsweise die eingangs genannte Frequenz, Phasenlage und/oder der Effektivwert der entsprechenden Spannung.

Durch die Erfindung lässt sich in einem elektrischen Energieversorgungsnetz eine gemeinsame Netzspannung asynchron aufbauen, ohne dass einzelne Netzbildner auf ihren Statikkennlinien stehen bleiben. So können beim Aufbau und Betrieb des elektrischen Energieversorgungsnetzes Kosten durch weniger Material und eine erhöhte Zuverlässigkeit gespart werden. In einer Weiterbildung der Erfindung ist die Grenze für die Einspeiseleistung erreicht, wenn eine maximal an das Energieversorgungsnetz abgebbarer Strom erreicht und/oder die Einspeiseleistung negativ ist. Dieser Weiterbildung liegt die Überlegung zugrunde, dass bei leistungselektronischen Komponenten wie Wechselrichtern und Frequenzumrichtern aufgrund ihrer Halbleiterbauelemente feste Stromgrenzen besitzen, die nicht überschritten werden können.

In einer anderen Weiterbildung der Erfindung ist der bestimmte Wert kleiner oder gleich der entsprechenden Eigenschaft der Netzspannung. Das heißt, dass als Grundlage für den bestimmten Wert der Istwert der entsprechenden Eigenschaft der Netzspannung herangezogen werden kann. Zwar könnte die bestimmte Spannung in jeder beliebigen Weise neu gewählt werden, dass sich der Netzbildner wieder frei auf der Statikkennlinie bewegen kann. So wäre es denkbar durch eine Interpolation des letzten Verlaufs die bestimmte Spannung rechnerisch zu bestimmen, oder intern im Netzbildner einen Hilfswert zu hinterlegen, zu dem sich der Netzbildner auf der Statikkennlinie bewegt. Durch die vorgeschlagene Weiterbildung steht jedoch ohne weitere Rechnerarchitektur, Kommunikationsmittel oder andere interne Speichererfordernisse am Netzbildner ein Richtwert zur Verfügung, mittels dem der Netzbildner seinen Punkt auf der Statikkennlinie neu ausrichten kann, um sich wieder frei bewegen zu können.

In einer bevorzugten Weiterbildung der Erfindung weist die Statikkennlinie einen Fußpunkt auf, der zum Anpassen der Eigenschaft der Einspeisespannung an den bestimmten Wert verschoben wird. Durch die Verschiebung des Fußpunktes wird die abzugebende Einspeiseleistung des das angegebene Verfahren ausführenden Netzbildners bei den aktuellen Eigenschaften der Einspeiseleistung reduziert. Durch diese Reduktion wird der Netzbildner aus seiner Leistungsgrenze gezogen und kann sich so wieder frei auf seiner Statikkennlinie bewegen.

In einer anderen Weiterbildung der Erfindung wird zum Verschieben des Fußpunktes eine zugeführte Primärenergie reduziert, aus der die Einspeiseleistung umgewandelt wird. Durch die reduzierte Primärenergiezufuhr wird automatisch auch die Einspeiseleistung reduziert, so dass kein weiterer Umprogrammieraufwand an der Statikkennlinie selbst notwendig ist.

In besonders bevorzugter Weise kann der Fußpunkt der Statikkennlinie auf seinen ursprünglichen Wert zurückgeschoben werden, wenn die Einspeisespannung kleiner als die Grenze für die Einspeiseleistung ist. Auf diese Weise kann der Netzbildner nach seiner Befreiung aus der Leistungsgrenze wieder an der Spannungserhaltung der von einer übergeordneten Einheit vorgegebenen Netzspannung in ihrer Frequenz und in ihrem Effektivwert beitragen.

In einer alternativen oder zusätzlichen Weiterbildung der Erfindung ist die Statikkennlinie linear und weist eine Steigung auf, die zum Anpassen der Eigenschaft der Einspeisespannung an den bestimmten Wert verändert wird. Auf diese Weise kann die Einspeiseleistung des Netzbildners bei den aktuellen Eigenschaften seiner Einspeisespannung ebenfalls reduziert werden, so dass der Netzbilder aus seiner Leistungsgrenze herausgezogen wird.

In einer besonderen Weiterbildung wird die Steigung der Statikkennlinie auf ihren ursprünglichen Wert zurückgesetzt, wenn die Einspeisespannung kleiner als die Grenze für die Einspeiseleistung ist.

In einer anderen Weiterbildung der Erfindung wird die Einspeisespannung an das elektrische Energieversorgungsnetz nach dem Empfang eines vorbestimmten Einschaltsignals angelegt. Das heißt, dass das Einschaltsignal den Schwarzstart auslöst, ab dem der entsprechende Netzbildner sich auf einen Punkt auf seinen Statikkennlinien mit den Solleigenschaften für die Netzspannung bewegen muss. Diese Solleigenschaften brauchen dem Netzbildner jedoch nicht explizit mitgeteilt zu werden, sondern er bewegt sich aufgrund dem Statikkennlinienverlauf des elektrischen Energieversorgungsnetzes aus Sicht seines Einspeisepunktes automatisch in einen Gleichgewichtspunkt, in dem die Solleigenschaften für die Netzspannung gegeben sind. Bleibt der Netzbildner aufgrund einer bestimmten Leistungsgrenze auf seiner Statikkennlinie stehen, so kann er mit dem angegebenen Verfahren wieder bewegt werden, so dass er diesen Gleichgewichtszustand sicher erreichen kann. Durch das Einschaltsignal können alle an der Erhaltung der Netzspannung beteiligten Netzbildner synchron schwarz gestartet werden.

In einer besonderen Weiterbildung ist das Einschaltsignal ein Anstieg einer Eigenschaft der Netzspannung.

In einer anderen Weiterbildung der Erfindung umfasst das angegebene Verfahren den Schritt Erfassen eines Einschaltsignals vor dem Anpassen der Einspeisespannung an die aktuell an das Energieversorgungsnetz abgegebene Einspeiseleistung. Durch das Einschaltsignal können alle am Schwarzstart beteiligten Netzbildner synchron gestartet und über das elektrische Energieversorgungsnetz untereinander synchronisiert werden, ohne dass eine extra Infrastruktur für ihre Kommunikation untereinander eingeführt werden müsste. Es reicht damit aus, wenn ein Master an einen der Netzbildner angeschlossen ist, der diesem Netzbildner das Startsignal gibt. Der vom Master gestartete Netzbildner kann einen anfänglichen Spannungsanstieg erzeugen, den alle anderen Netzbildner messen können, um in den Schwarzstart des elektrischen Energieversorgungsnetzes einzusteigen.

In einer bevorzugten Weiterbildung der Erfindung wird Eigenschaft der Einspeisespannung nach Empfang des vorbestimmten Signals basierend auf einem Sollverlauf folgegeregelt. Auf diese Weise können die an der Erhaltung der Netzspannung beteiligten Netzbildner mit einer vorbestimmbaren Geschwindigkeit an den zuvor genannten Gleichgewichtspunkt auf Ihrer Kennlinie herangeführt werden, was die Wahrscheinlichkeit, dass Netzbildner überhaupt auf Ihren Statikkennlinien stehen bleiben senkt.

In einer besonders bevorzugten Weiterbildung der Erfindung ist die folgegeregelte Eigenschaft der Einspeisespannung der Effektivwert der Einspeisespannung. Der entsprechend geregelte Spannungsanstieg ist dann die bereits genannte Spannungsrampe, die beispielsweise aufgrund einer langsamen Parallelverschiebung der Blindleistungskennlinie des entsprechenden Netzbildners beim Schwarzstart entsteht. Durch den geregelten Anstieg des Effektivwerts der Spannung können Änderungen der einzelnen Einspeisespannung im elektrischen Energieversorgungsnetz beeinflusst werden, die aufgrund von Induktionsströmen zu entsprechenden Störungen im elektrischen Energieversorgungsnetz führen könnten.

In einer alternativen Weiterbildung ist der Sollverlauf rampenförmig.

In einer zusätzlichen Weiterbildung ist eine zeitliche Länge der Rampenform kürzer, als eine Übertragungsdauer des Einschaltsignals. Das heißt, dass die einzelnen, nicht an den Master angeschlossenen Netzbildner den Spannungsanstieg detektieren sollten, bevor der an den Master angeschlossene Netzbildner in einen stationären Zustand übergeht.

In einer zusätzlichen Weiterbildung der Erfindung umfasst das angegebene Verfahren den Schritt Erhöhen der Einspeiseleistung an das elektrische Energieversorgungsnetz basierend auf einer Sollform für die Netzspannung. Die Sollform für die Netzspannung kann beispielsweise von einem Master vorgegeben werden, der mit ausschließlich einem einzigen Netzbildner im elektrischen Energieversorgungsnetz kommuniziert. Durch die angegebene Erfindung können dann alle anderen Netzbildner ihre Ausgabespannung an die Sollform der Netzspannung anpassen, ohne dass weitere Kommunikationsmittel als das eigentliche elektrische Energieübertragungsnetz zur Synchronisation der einzelnen Netzbildner untereinander notwendig sind.

In einer besonderen Weiterbildung der Erfindung umfasst die Statikkennlinie eine Blindleistungsstatikkennlinie, die die Blindleistung der Einspeiseleistung dem Effektivwert der Einspeisespannung gegenüberstellt. Da Blindleistung eine Leistungsform, die periodisch zwischen einem elektrischen Energieerzeuger und einem elektrischen Verbraucher hin- und herpulsiert, wird sie beispielsweise zum Betrieb von Asynchronmotoren benötigt. Über die Zufuhr von Blindleistung zum elektrischen Energieversorgungsnetz kann der Erhalt der Amplitude und damit der Effektivwert der Netzspannung beeinflusst werden, da die zugeführte Blindleistung Induktionsströme im Netz erzeugt, die die Netzspannung beeinflussen.

In einer bevorzugten Weiterbildung der Erfindung umfasst das angegebene Verfahren den Schritt Verschieben der Blindleistungsstatikkennlinie zum Erhöhen der Einspeiseleistung an das elektrische Energieversorgungsnetz. Durch die Verschiebung der Blindleistungsstatikkennlinie und der damit verbundenen Beeinflussung der Einspeisespannung kann eine Spannungsrampe erzeugt werden. Durch eine definierte Verschiebung der Blindleistungsstatikkennlinie über die Zeit kann die Form der Spannungsrampe über die Zeit einer vordefinierten Form angepasst werden.

In einer anderen Weiterbildung der Erfindung umfasst die Statikkennlinie eine Wirkleistungsstatikkennlinie, die die Wirkleistung der Einspeiseleistung der Frequenz der Einspeisespannung gegenüberstellt, und die während der Erhöhung der Einspeiseleistung an das elektrische Energieversorgungsnetz konstant gehalten wird. Bei einem Generator ist die Wirkleistung abhängig vom Produkt aus Winkelgeschwindigkeit und Drehmoment. Dieses Generatorverhalten kann jedem Netzbildner, wie beispielsweise einem Wechselrichter mit angeschlossener Solarzelle durch geeignete Regelkreise aufgezwungen werden, so dass die Netzfrequenz des Energieversorgungsnetzes durch die Regelung über dem Energieversorgungsnetz zugeführte Wirkleistung konstant gehalten werden kann.

Die Erfindung gibt auch eine Steuervorrichtung zur Durchführung des angegebenen Verfahrens an.

In einer Weiterbildung weist die angegebene Steuervorrichtung einen Speicher und einen Prozessor auf. Dabei ist das Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Die Erfindung gibt auch einen Netzbildner für ein elektrisches Leistungsnetz an, der einen elektrischen Energieerzeuger zum Abgeben einer Einspeisespannung in ein elektrisches Energieversorgungsnetz mit einer Netzspannung und eine angegebene Steuervorrichtung umfasst.

In einer Weiterbildung umfasst der angegebene Netzbildner einen Energiespeicher zum Aufnehmen einer elektrischen Energie aus dem Energieversorgungsnetz. Durch den Energiespeicher kann der Netzbildner im elektrischen Leistungsnetz oder elektrischen Energieversorgungsnetz auch als Verbraucher wirken und elektrische Energie aufnehmen, wenn dies erforderlich sein sollte.

In einer besonderen Weiterbildung ist der Energieerzeuger ein Wechselrichter, der ausgebildet ist, elektrische Energie aus einer Gleichspannungsquelle in die Einspeisespannung umzuwandeln.

Die Erfindung gibt auch ein elektrisches Energieversorgungsnetz an, das einen Netzbildner zum Abgeben von elektrischen Einspeisespannungen zur Bildung einer Netzspannung und elektrische Verbraucher zum Aufnehmen der Netzspannung umfasst. Dabei ist wenigstens ein Netzbildner wie der zuvor angegebene Netzbildner ausgebildet.

In einer Weiterbildung der Erfindung sind alle Netzbildner wie der angegebene Netzbildner ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

FIG 1 ein Prinzipschaltbild eines elektrischen Energieversorgungsnetzes,

FIG 2 einen Teil des elektrischen Energieversorgungsnetzes aus FIG 1,

FIG 3 eine Wirkleistungsstatikkennlinie eines elektrischen Energieerzeugers aus FIG 2,

FIG 4 eine Blindleistungsstatikkennlinie eines elektrischen Energieerzeugers aus FIG 2,

FIG 5 die Blindleistungsstatikkennlinie aus FIG 4 während eines Schwarzstarts des elektrischen Energieversorgungsnetzes aus FIG 1,

FIG 6 einen Ausschnitt der Wirkleistungsstatikkennlinie aus FIG 2,

FIG 7 einen Ausschnitt des elektrischen Energieversorgungsnetzes aus FIG 1,

FIG 8 ein erstes Ausführungsbeispiel der Vorrichtung aus FIG 6,

FIG 9 ein zweites Ausführungsbeispiel der Vorrichtung aus FIG 6,

FIG 10 ein drittes Ausführungsbeispiel der Vorrichtung aus FIG 6,

FIG 11 ein viertes Ausführungsbeispiel der Vorrichtung aus FIG 6, und

FIG 12 ein Ausführungsbeispiel eines Verfahrens gemäß der Erfindung zeigen.

In den Figuren werden gleiche Elemente mit gleichen Bezugszeichen versehen und nur einmal beschrieben.

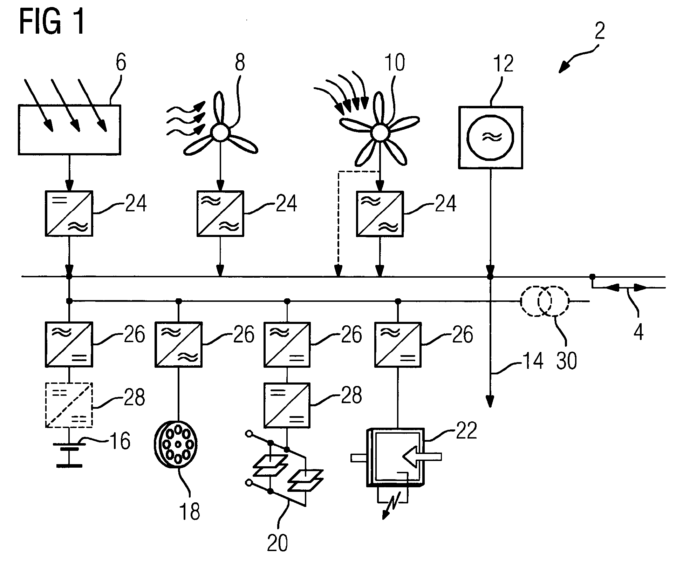

FIG 1 zeigt ein Prinzipschaltbild eines elektrischen Energieversorgungsnetzes 2.

Das elektrische Energieversorgungsnetz 2 ist in der vorliegenden Ausführung als Inselnetz 2 ausgebildet, das zwar an ein zentrales Verbundnetz 4 angeschlossen ist, im Regelbetrieb jedoch völlig unabhängig von diesem betrieben werden kann.

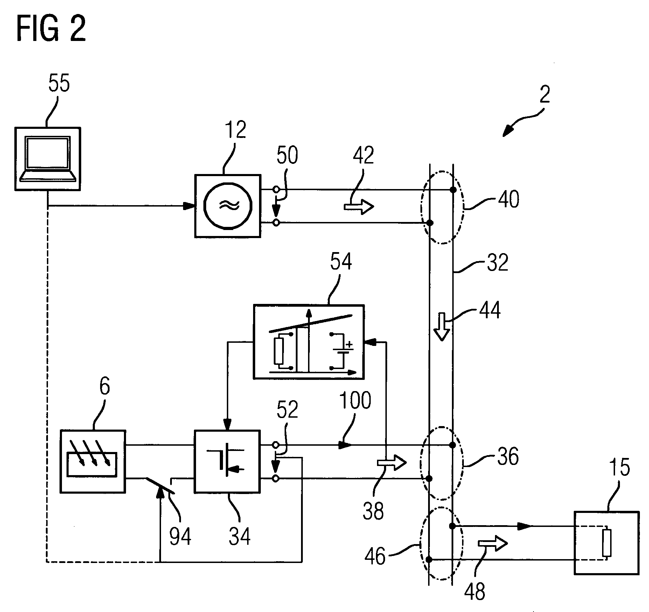

Das Inselnetz 2 kann von verschiedenen elektrischen Leistungsquellen mit elektrischer Energie versorgt werden. In der vorliegenden Ausführung umfassen die elektrischen Leistungsquellen eine Solarzelle 6, ein Windrad 8, ein Wasserrad 10 und einen Dieselgenerator 12. Die elektrische Energie aus den elektrischen Leistungsquellen kann in Richtung 14 eines oder mehrerer in FIG 2 gezeigter Verbraucher 15 abgegeben werden. Ist die elektrische Leistungszufuhr durch die elektrischen Leistungsquellen größer als die Verbraucher 15 aufnehmen können, so kann ein Überschuss an elektrischer Energie in Energiespeichern zwischengespeichert werden. In der vorliegenden Ausführung umfassen die Energiespeicher einen Akkumulator 16, ein Schwungrad 18 und einen Doppelschichtkondensator 20. Ferner ist als elektrische Leistungsquelle noch eine Brennstoffzelle 22 angeordnet. Übersteigt der elektrische Leistungsbedarf der Verbraucher 15 zeitweise die elektrische Energieabgabe durch die elektrischen Leistungsquellen, so kann der in den Energiespeichern gespeicherte elektrische Energieüberschuss wieder abgerufen werden.

Nachstehend wird angenommen, dass bei der elektrischen Energieabgabe an das Inselnetz 2 alle elektrischen Leistungsquellen 6, 8, 10, 12 als Netzbildner und alle elektrischen Energiespeicher 16, 18, 20, 22 als Netzstützer betrieben werden.

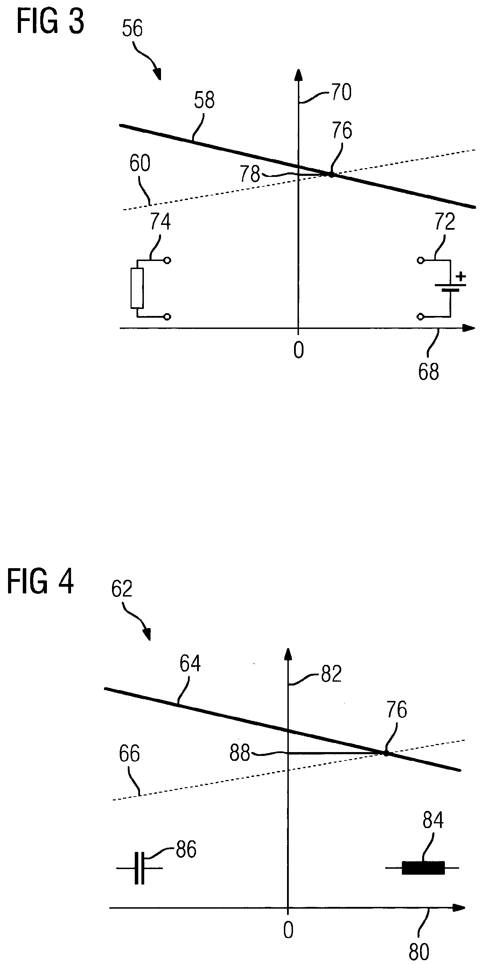

Die Netzbildner 6, 8, 10, 12 regeln die Netzspannung des Inselnetzes 2 basierend auf in FIG 3 und 4 gezeigter Statikkennlinien. Diese stellen die Form der Netzspannung der vom Inselnetz 2 abgerufenen elektrischen Leistung gegenüber. Während dem Dieselgenerator 12 die Statikkennlinien intrinsisch vorgegeben sind, müssen an die Solarzelle 6, das Windrad 8 und das Wasserrad 10 entsprechend vom Netzzustand abhängig geregelte Stromrichter 24 nachgeschaltet werden, die diesen elektrischen Leistungsquellen entsprechende Statikkennlinien aufzwingen, worauf im Rahmen der FIG 2 näher eingegangen wird. Wenn ein Wasserfluss durch das Wasserrad 10 beispielsweise mit Drosselklappen und Bypässen geregelt werden kann, kann wie in FIG 1 gestrichelt angedeutet, gegebenenfalls auf einen extra selbstgeführten Stromrichter 24 verzichtet werden.

Die Netzstützer 16, 18, 20, 22 speisen in erster Näherung unabhängig vom Zustand des Inselnetzes 2 ihre aktuell verfügbare Leistung in das Inselnetz 2 ein. Dazu sind den Netzstützern 16, 18, 20, 22 in der vorliegenden Ausführung entsprechend von der verfügbaren Einspeiseleistung abhängig geregelte Stromrichter 26 nachgeschaltet. Dem Akkumulator 16 und dem Doppelschichtkondensator 20 kann jeweils ein Gleichspannungswandler 28 nachgeschaltet sein, um Spannungsschwankungen dieser beiden Energiespeicher abhängig von ihrem Ladezustand auszugleichen.

Während die Netzstützer 16, 18, 20, 22 im Inselnetz 2 wie Stromquellen wirken, wirken die Netzbildner 6, 8, 10, 12 wie Spannungsquellen.

Das Inselnetz 2 kann über einen Transformator 30 mit weiteren nicht gezeigten Inselnetzen 2 verbunden sein.

Für die weitere Darstellung des Ausführungsbeispiels wird das Inselnetz 2 nachstehend vereinfacht und anhand einer zweiphasigen elektrischen Energieversorgung erklärt. Alle nachfolgenden Aussagen lassen sich aber in einer dem Fachmann bekannten Weise auf beliebig viele Phasen erweitern.

In dem vereinfachten Inselnetz 2 werden nur noch die Solarzelle 6 und der Dieselgenerator 12 betrachtet, die über ein Leitungsnetz 32 mit dem Verbraucher 15 verbunden sind. Der selbstgeführte Stromrichter 24 der Solarzelle 6 ist ein Wechselrichter 34. Da jeder selbstgeführte, eine Wechselspannung ausgebende Stromrichter 24 in der Regel einen Wechselrichter umfasst, können die nachstehenden Aussagen zum Wechselrichter 34 auf alle im Inselnetz 2 der FIG 1 gezeigten selbstgeführten Stromrichter 24 übertragen werden. Während der Wechselrichter 34 und der Dieselgenerator 12 jeweils an einem Wechselrichteranschlusspunkt 36 eine elektrische Wechselrichterleistung 38 und an einem Generatoranschlusspunkt 40 eine elektrische Generatorleistung 42 in das Leitungsnetz 32 einspeisen und so eine elektrische Netzleistung 44 aufrechterhalten, entnimmt der Verbraucher 15 an einem Verbraucheranschlusspunkt 46 dem Leitungsnetz 32 eine elektrische Verbraucherleistung 48.

Da die Solarzelle 6 und der Dieselgenerator 12 als Netzbildner betrieben werden, muss die Wechselrichterleistung 38 und die Generatorleistung 42 aufeinander synchronisiert werden, um zu vermeiden, dass der Wechselrichter 34 und der Generator 12 untereinander elektrische Leistung austauschen und wie elektrische Verbraucher zueinander wirken.

Zur Synchronisation der Wechselrichterleistung 38 und der Generatorleistung 42 kann die Abhängigkeit der Generatorspannung 50 von der Generatorleistung 42 genutzt werden. Beispielsweise sinkt die Frequenz der Generatorspannung 50 mit steigendem Wirkanteil in der Generatorleistung 42, oder der Effektivwert der Generatorspannung 50 sinkt mit steigendem Blindanteil in der Generatorleistung 42. Diese Abhängigkeit wird in den bereits genannten Statikkennlinien modelliert. Werden mehrere elektrische Energieerzeuger mit einer derartig von der abgegebenen Leistung abhängigen Abgabespannung mit einem oder mehreren Verbrauchern zusammengeschaltet, so stellt sich ein stabiler Arbeitspunkt mit einer stabilen Abgabespannung ein, bei der jeder einzelne elektrische Energieerzeuger elektrische Leistung abgibt und nur der oder die elektrischen Verbraucher elektrische Leistung aufnehmen.

Da die Wechselrichterspannung 52 grundsätzlich nicht von der Wechselrichterleistung 38 abhängig ist, muss sie wie bereits angedeutet künstlich von der Wechselrichterleistung 14 abhängig gemacht werden. Dies erfolgt dadurch, dass für den Wechselrichter 34 Wechselrichter-Statikkennlinien definiert werden und die Wechselrichterspannung 52, wie in FIG 2 angedeutet, über entsprechend invertierte Wechselrichter-Statikkennlinien 54 von der Wechselrichterleistung 38 abhängig gemacht wird. Auf diese Weise verhält sich der Wechselrichter 34 wie der Generator 12 und kann mit diesem über die Statikkennlinien im elektrischen Energieversorgungsnetz synchronisiert werden. Als eigentlicher Netzbildner wirkt damit nicht die Solarzelle 6 sondern der an sie angeschlossene Wechselrichter 34, weshalb im Wesentlichen nur noch der Wechselrichter 34 betrachtet werden soll.

Der Dieselgenerator 12 und/oder der Wechselrichter 34 mit seinen invertierten Statikkennlinien 54 können von einem Master-Computer 55 angesteuert werden, worauf an späterer Stelle näher eingegangen wird.

Bevor auf die Synchronisation im Einzelnen eingegangen wird, sollen kurz die Statikkennlinien näher erläutert werden.

FIG 3 zeigt ein Wirkleistungsdiagramm 56 mit einer Wechselrichter-Wirkleistungsstatikkennlinie 58 und einer vom Wechselrichter 34 aus gesehenen Leitungsnetz-Wirkleistungsstatikkennlinie 60. Darüber hinaus zeigt FIG 4 ein Blindleistungsdiagramm 62 mit einer Wechselrichter-Blindleistungsstatikkennlinie 64 und einer vom Wechselrichter 34 aus gesehenen Leitungsnetz-Blindleistungsstatikkennlinie 66.

Ein Wirkleistungsdiagramm stellt für einen beliebigen Zweipol die vom Zweipol abgegebene oder aufgenommene Wirkleistung 68 der Frequenz 70 seiner abgegebenen oder aufgenommenen Spannung gegenüber. Ist die Wirkleistung 68 positiv so wirkt der Zweipol wie ein Erzeuger 72. Ist die Wirkleistung 68 negativ so wirkt der Zweipol wie ein Verbraucher 74.

Die Wechselrichter-Wirkleistungsstatikkennlinie 58 ist wie bereits erwähnt vorgegeben. Die Leitungsnetz-Wirkleistungsstatikkennlinie 60 stellt das Verhalten des Leitungsnetzes 4 aus Sicht des Wechselrichters 34 dar und ist von einer nicht gezeigten Dieselgenerator-Wirkleistungsstatikkennlinie, der Impedanz des Verbrauchers 15 und der Impedanz des Leitungsnetzes 32 abhängig. Im Betrieb, wenn der Wechselrichter 34 und das vom Wechselrichter 34 aus gesehene Leitungsnetz 32 miteinander verbunden sind stellt sich zwischen der Wechselrichterleistung 38 und der vom Leitungsnetz 32 aufgenommenen elektrischen Leistung am Wechselrichteranschlusspunkt 36 der Wechselrichter-Arbeitspunkt 76 ein, in dem sich die Wechselrichter-Wirkleistungsstatikkennlinie 58 und die Leitungsnetz-Wirkleistungsstatikkennlinie 60 schneiden. Durch den Wechselrichter-Arbeitspunkt 76 ist die Netzfrequenz 78 der gemeinsamen Netzspannung gegeben.

Darüber hinaus stellt das Blindleistungsdiagramm 62 für einen beliebigen Zweipol die vom Zweipol abgegebene oder aufgenommene Blindleistung 80 dem Effektivwert 82 seiner abgegebenen oder aufgenommenen Spannung gegenüber. Ist die Blindleistung 80 positiv, wirkt der Zweipol wie eine Induktivität 84. Ist die Blindleistung 80 negativ, wirkt der Zweipol wie eine Kapazität 86.

Die Wechselrichter-Blindleistungsstatikkennlinie 64 ist ebenfalls vorgegeben. Die Leitungsnetz-Blindleistungsstatikkennlinie 66 stellt wieder das Verhalten des Leitungsnetzes 32 aus Sicht des Wechselrichters 34 dar und ist von einer nicht gezeigten Dieselgenerator-Blindleistungsstatikkennlinie, der Impedanz des Verbrauchers 15 und der Impedanz des Leitungsnetzes 32 abhängig.

Werden der Wechselrichter 34 und das vom Wechselrichter 34 aus gesehene Leitungsnetz 32 miteinander verbunden kann aus dem Schnittpunkt zwischen der Wechselrichter-Blindleistungsstatikkennlinie 64 und der Leitungsnetz-Blindleistungsstatikkennlinie 66 der Netzeffektivwert 88 der gemeinsamen Netzspannung abgelesen werden.

Nachstehend wird wieder auf die Synchronisation der Wechselrichterleistung 38 und der Generatorleistung 42 Bezug genommen.

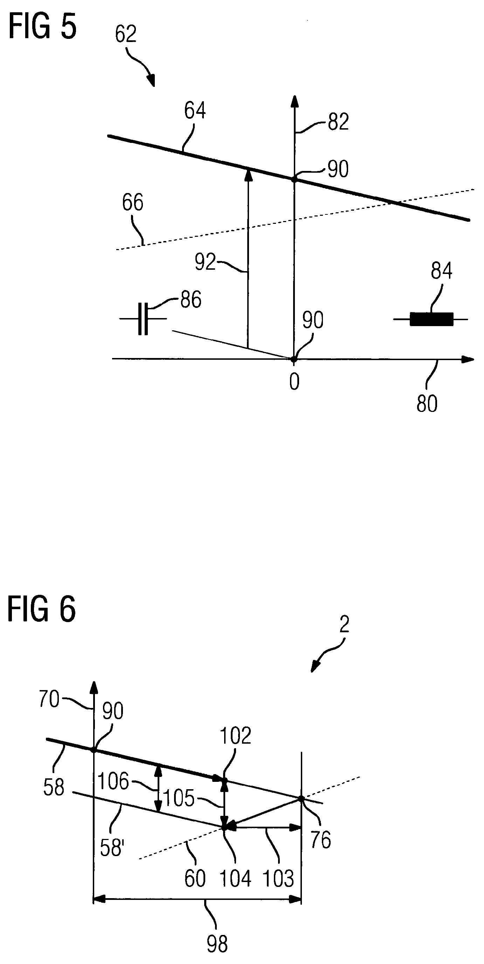

Zu Beginn der elektrischen Leistungsabgabe durch den Dieselgenerator 12 und durch den Wechselrichter 34, wenn dem Dieselgenerator 12 noch keine chemische Energie in Form von Diesel und dem Wechselrichter 34 noch keine elektrische Energie aus der Solarzelle 6 zugeführt wird, verlaufen alle ihre entsprechenden Statikkennlinien durch den Koordinaten-Ursprung des Statikkennlinien-Diagramms, wie es in FIG 5 beispielhaft anhand der Blindleistungsstatikkennlinie 64 des Wechselrichters 34 gezeigt ist. Die Leerlaufspannung 90, das heißt die Wechselrichterspannung 52 beziehungsweise die Dieselgeneratorspannung 50 im lastfreien Zustand beträgt daher ebenfalls Null, so dass an den elektrischen Verbraucher 15 keine elektrische Leistung 38, 42 abgegeben werden kann.

Zur elektrischen Leistungsabgabe wird dem Dieselgenerator 12 chemische Energie in Form von Diesel und dem Wechselrichter 34 elektrische Energie aus der Solarzelle 6 zugeführt. Diese externe Energiezufuhr 92 hebt die Leerlaufspannung 90 und damit die Statikkennlinie (in FIG 5 die Blindleistungsstatikkennlinie 64) des Wechselrichters 34 und des Dieselgenerators 12 an und ermöglicht so die Abgabe elektrischer Leistung 38, 42 an den Verbraucher 15. Ist der elektrische Verbraucher 15 an das elektrische Energieversorgungsnetz 2 angeschlossen, so stellt sich zwischen dem Dieselgenerator 12, dem Wechselrichter 34 und dem elektrischen Verbraucher 15 der oben genannte Arbeitspunkt 76 ein.

Um die elektrische Leistungsabgabe zu starten, kann beispielsweise der Master-Computer 55 den Verbrennungsvorgang im Dieselgenerator 12 starten und diesen so einschalten. Der Start des Dieselgenerators 12 verursacht im elektrischen Energieversorgungsnetz 2 eine Spannungsrampe, die zum Start der elektrischen Leistungsabgabe des Wechselrichters 34 herangezogen werden kann. Dazu ist der Wechselrichter 34 mit der Solarzelle 6 über einen Schalter 94 verbunden, der über die Wechselrichterspannung 52 am Wechselrichteranschlusspunkt 36 steuerbar ist. Sobald die Wechselrichterspannung 52 einen bestimmten Schwellwert überschreitet wird der Schalter geschlossen und die elektrische Energiezufuhr des Wechselrichters 34 aus der Solarzelle 6 gestartet.

Alternativ kann, wie in FIG 2 gestrichelt angedeutet, auch der Schalter 94 über den Master-Computer 55 gesteuert werden, wobei der Dieselgenerator 12 basierend auf der Generatorspannung 50 am Generatoranschlusspunkt 40 eingeschaltet wird.

Weiter alternativ können der Dieselgenerator 12 und der Schalter 94 beide vom Master-Computer gesteuert werden, wie in FIG 2 durch eine gestrichelte Line angedeutet.

Die Kommunikation zwischen dem Master-Computer 55 und dem Dieselgenerator 12 und/oder dem Schalter 94 kann über getrennte Leitungen erfolgen, wie in FIG 2 gezeigt. Alternativ kann der Master-Computer 55 seine Signale aber auch über das elektrische Energieversorgungsnetz 2 übertragen und der elektrischen Leitungsnetzleistung 44 überlagern.

Speisen der Dieselgenerator 12 und der Wechselrichter 34 gemeinsam elektrische Leistung 42, 38 in das elektrische Energieversorgungsnetz 2 ein, so müssen sich beide Netzbildner wie bereits erwähnt aufeinander synchronisieren, um untereinander keine Leistung auszutauschen. Diese Synchronisation erfordert es aber, dass sich der Wechselrichter 34 und der Dieselgenerator 12 frei auf ihren Statikkennlinien 58, 64 bewegen können. Der Wechselrichter 34 kann jedoch nur in einer bestimmten Höhe elektrischen Strom abgeben, weshalb der Wechselrichter 34 besonders bei kleinen Spannungen zu Beginn der elektrischen Leistungsabgabe eine kleine elektrische Leistungsgrenze aufweist und sich nicht frei auf seinen Statikkennlinien bewegen kann. Dies verhindert eine Synchronisation des Dieselgenerators 12 und des Wechselrichters 34 und soll nachstehend kurz anhand FIG 6 erläutert werden soll, die einen Ausschnitt 96 des aus dem Wirkleistungsdiagramm der Fig. 3 zeigt.

Zu Beginn der elektrischen Leistungsabgabe befindet sich der Wechselrichter 34 im Punkt der Leerlaufspannung 90.

Nach dem Auslösen des Start der elektrischen Energieversorgung durch den Master-Computer 55, wenn der Wechselrichter 34 und Dieselgenerator 12 beide elektrische Leistung 38, 42 in das elektrische Energieversorgungsnetz 2 einspeisen ist die Leitungsnetz-Wirkleistungsstatikkennlinie 60 aus Sicht des Wechselrichters 34 vom Generator 8 abhängig, und beide Kennlinien schneiden sich im Wechselrichter-Arbeitspunkt 76. Um sich zum Wechselrichter-Arbeitspunkt 76 zu bewegen, muss der Wechselrichter 34 zusätzliche Wirkleistung 98 bereitstellen. Da die Netzspannung am Wechselrichter 34 zu Beginn der elektrischen Energieversorgung jedoch sehr klein ist, kann die zusätzliche Wirkleistung 98 im Wesentlichen lediglich über den in FIG 2 gezeigten Wechselrichterstrom 100 bereitgestellt werden, der jedoch durch die Stromgrenze des Wechselrichters 34 ebenfalls begrenzt ist. In der Folge bleibt der Wechselrichter 34 auf seiner Wechselrichter-Wirkleistungskennlinie 58 vor dem Wechselrichter-Arbeitspunkt 76 an einem Grenzarbeitspunkt 102 stehen.

Demgegenüber kann sich der Dieselgenerator 12 auf seiner Generator-Wirkleistungsstatikkennlinie gegebenenfalls bis zur Abschaltung frei zum Wechselrichter-Arbeitspunkt 76 bewegen. Da der Wechselrichter 34 dem Generator 8 nicht folgen kann, bewegt sich der Generator auf seiner Generator-Wirkleistungsstatikkennlinie vom Wechselrichter-Arbeitspunkt 76 aus gesehen wieder zurück, um eine vom Wechselrichter 34 fehlende Wirkleistungsdifferenz 103 bereitzustellen. Aus Sicht des Wechselrichters 34 nimmt das Leitungsnetz 4 so auf der Leitungsnetz-Wirkleistungsstatikkennlinie 60 einen Ausgleichsarbeitspunkt 104 ein. In der Folge gibt der Wechselrichter 34 eine Wechselrichterspannung 52 aus, die eine mit einem Frequenzunterschied 105 verschiedene Frequenz 70 zur Netzspannung aufweist.

Die Situation ergibt anhand der Blindleistungsstatikkennlinien 64, 66 sieht analog aus. Die Situation verschärft sich weiter, da sich die Wirkleistungsstatikkennlinie 58 und die Blindleistungsstatikkennlinie 64 des Wechselrichters 34 beim Betrieb des Wechselrichters 34 bei seiner Stromgrenze $I_{max}$ miteinander vermischen und der Wirkstrom $I_P$ des Wechselrichters 34 und der Blindstrom $I_Q$ des Wechselrichters 34 über den Gesamtstrom $I_{ges}$ wie folgt miteinander verkoppelt sind:

$$I_P = \sqrt{I_{max}^2 - I_Q^2} \ .$$

Um dieses Problem zu beseitigen, schlägt die Erfindung vor, die Wechselrichterspannung 52 im Falle des Synchronisationsproblems so zu verändern, dass sich der Wechselrichter 34 wieder frei auf seinen Statikkennlinien 58, 64 bewegen kann. Dazu könnte die elektrische Energiezufuhr zum Wechselrichter 34 aus der Solarzelle 6 reduziert werden. Dies bewirkt, dass die Statikkennlinien 58, 64 des Wechselrichters 34 um einen definierten Betrag 106 negativ verschoben werden. Werden die Statikkennlinien 58, 64 des Wechselrichters 34 beispielsweise solange verschoben, dass sie durch den aktuellen Ausgleichsarbeitspunkt 104 des Leitungsnetzes laufen, kann sich der Wechselrichter 34 wieder auf seinen Statikkennlinien 58, 64 frei bewegen. In der Folge könnten die Statikkennlinen 58, 64 des Wechselrichters 34 und damit die Leistungszufuhr aus der Solarzelle 6 wieder langsam angehoben werden, um die eigentlich vom Master 55 vorgegebene Netzspannung einzustellen. Die Änderung der Statikkennlinie 58, 64 kann im einfachsten Fall dadurch erreicht werden, dass der Wechselrichter 34 für die Zeit der Absenkung der Statikkennlinie 58, 64 der Netzspannung und damit dem aktuellen Ausgleichsarbeitspunkt 104 des Leistungsnetzes 32 folgt. Alternativ oder zusätzlich könnte auch die Steigung der Statikkennlinien 58, 64 des Wechselrichters 34 kurzzeitig geändert werden.

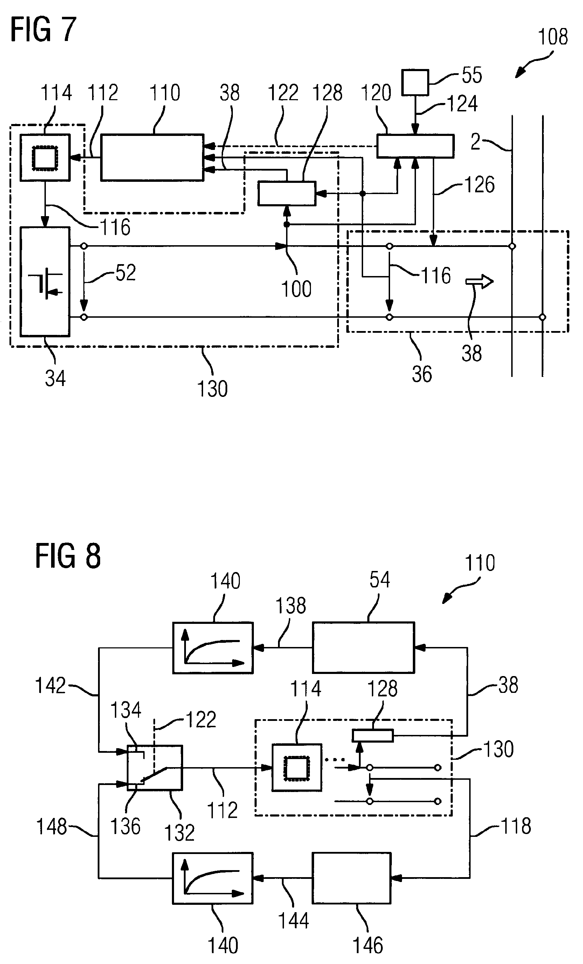

FIG 7 zeigt einen Ausschnitt 108 aus dem elektrischen Energieversorgungsnetz 2 der FIG 2 mit einer Vorrichtung 110 zur Steuerung des Wechselrichters 34. Der Wechselrichter 34 ist nachstehend ein selbstgeführter Wechselrichter.

Die Vorrichtung 110 kann basierend auf der in das Leitungsnetz 2 eingespeisten Wechselrichterleistung 38 ein Stellsignal 112 an einen Ansteuerprozessor 114 des Wechselrichters 34 ausgeben, der wiederum basierend auf dem Stellsignal 112 Taktsignale 116 an nicht gezeigte Schalter des Wechselrichters 34 ausgeben kann, mit denen der Wechselrichter 34 die Wechselrichterspannung 52 erzeugt.

Die Vorrichtung 110 schaltet den Betrieb des Wechselrichters 34 zwischen einem Regelbetriebsmodus und einem Fehlerbetriebsmodus hin und her. Solange es keine Synchronisationsprobleme gibt, kann der Wechselrichter 34 im Regelbetriebsmodus dazu beitragen, die Netzspannung 118 im Leitungsnetz 2 konstant zu halten. Im Falle von Synchronisationsproblemen sollte der Wechselrichter 34 der Netzspannung 118 folgen.

Zum Umschalten zwischen dem Regelbetriebsmodus und dem Fehlerbetriebsmodus kann eine Fehlererkennungseinrichtung 120 der Vorrichtung 110 den Wechselrichteranschlusspunkt 36 auf Synchronisationsprobleme hin überwachen und der Vorrichtung ein entsprechendes Zustandssignals 122 ausgeben. Nachstehend werden einige Kriterien zur Erkennung eines Synchronisationsproblems genannt. Je mehr dieser Kriterien in die Erkennung eines Synchronisationsproblems einbezogen werden, desto verlässlicher ist die Überwachung und desto weniger wird der Wechselrichter 34 fehlerhaft in den Fehlerbetriebsmodus überführt.

Als erstes Kriterium kann die Fehlererkennungseinrichtung 120 überprüfen, ob ein Wechselrichterstrom 100 seinen Maximalstrom $I_{ges}$ erreicht hat.

Alternativ oder zusätzlich kann die Fehlererkennungseinrichtung 120 überprüfen, ob aktuell ein Kurzschluss im Leitungsnetz 4 vorliegt. Dies kann beispielsweise dadurch geschehen, dass die Höhe der Netzspannung 118 überwacht und einem Schwellenwert gegenübergestellt wird. Im Falle eines Kurzschlusses unterschreitet die Netzspannung 118 den Schwellenwert.

Weiter alternativ oder zusätzlich kann die Fehlererkennungseinrichtung 120 überprüfen, ob der Wechselrichter 34 derzeit als einzige elektrische Energieerzeugungseinheit an das Leitungsnetz 2 angeschlossen ist.

Dazu kann die Fehlererkennungseinrichtung 120 beispielsweise vom Master 55 ein Parametrisierungssignal 124 erhalten, aus dem hervorgeht wie viele elektrische Energieerzeugungseinheiten an das Leitungsnetz 2 angeschlossen sind.

Alternativ oder zusätzlich kann die Fehlererkennungseinrichtung 120 im Regelbetriebsmodus eine Störung 126 in das Leitungsnetz 4 einspeisen, und so den Wechselrichter 34 gezielt aus dem Wechselrichterarbeitspunkt 76 lenken. Ändert sich die Netzleistung 20 signifikant entsprechend der eingebrachten Störung 126, so kann angenommen werden, dass diese Reaktion von einer weiteren Erzeugereinheit mit einem Statikkennlinien-Verhalten hervorgerufen wird.

Als Störung 126 werden vorzugsweise sprunghafte und sinusförmige Ströme oder Spannungen vorgeschlagen, deren Amplitude nicht zu einer Verletzung der zulässigen Toleranzgrenzen für die Netzspannung 118 führen darf. Zudem muss das Zeitverhalten an die dominierende Zeitkonstante des Generators 12 angepasst sein, um bei diesem eine Frequenz-Spannungs-Reaktion hervorzurufen.

In FIG 7 wird die Wechselrichterleistung 38 über ein Leistungsmessgerät 128 basierend auf der Netzspannung 118 und dem Wechselrichterstrom 100 erfasst.

Nachstehend wird die Vorrichtung 124 anhand von vier Ausführungsbeispielen näher beschrieben. Zur Vereinfachung der weiteren Darstellungen werden der Ansteuerprozessor 114, der Wechselrichter 34 und das Leistungsmessgerät 128 zu einer Regelstrecke 130 zusammengefasst, die durch die Vorrichtung 110 über das Stellsignal 112 angesteuert wird.

In FIG 8 ist das erste Ausführungsbeispiel der Vorrichtung 110 gezeigt.

Ein durch das Zustandssignal 122 steuerbarer Schalter 132 gibt vor, in welchem der beiden Betriebsmodi der Wechselrichter 34 der Regelstrecke 130 angesteuert werden soll. Dazu ist der Schalter 132 in eine Stellung für den Regelbetriebsmodus 134 und eine Stellung für den Fehlerbetriebsmodus 136 überführbar.

Im Regelbetriebsmodus 134 wird der Wechselrichter 34 wie in FIG 2 über die invertierte Wechselrichter-Statikkennlinie 54 mit einem Ansteuersignal derart angesteuert, das der Wechselrichter 34 sich einem vorgegebenen Statikverhalten anpasst und so aktiv zur Erhaltung einer konstanten Netzspannung 118 beiträgt. Da der Wechselrichter 34 in diesem Fall eine bestimmte Wechselrichterleistung 38 in das Leitungsnetz 2 abgeben muss, soll das Ansteuersignal im Regelbetriebsmodus 134 als Leistungssteuersignal 138 bezeichnet werden. Über einen Tiefpassfilter 140 mit PT1-Verhalten können aus dem Leistungssteuersignal 138 Schwankungen gedämpft werden, die beispielsweise aus Rauschen herrühren. Das tiefpassgefilterte Leistungssteuersignal 142 wird im Regelbetriebsmodus 134 schließlich als das Stellsignal 112 an den Ansteuerprozessor 114 ausgegeben, um die Wechselrichterspannung 52 einzustellen.

Im Fehlerbetriebsmodus 136 wird die Regelstrecke 130 mit einem Ansteuersignal derart angesteuert, dass die Wechselrichterspannung 52 der Netzspannung 118 folgt. Das Ansteuersignal soll im Fehlerbetriebsmodus daher als Folgesteuersignal 144 bezeichnet werden. Das Folgesteuersignal 144 kann beispielsweise aus der Netzspannung 118 über eine Phasenregelschleife 146, PLL 146 genannt, in einer für den Fachmann bekannten Weise abgeleitet werden, um das Folgesteuersignal 144 zu stabilisieren. Über einen weiteren Tiefpassfilter 140 können wieder Schwankungen im Folgesteuersignal 144 gedämpft werden, wobei das tiefpassgefilterte Folgesteuersignal 148 als das Stellsignal 126 an den Ansteuerprozessor 128 ausgegeben wird.

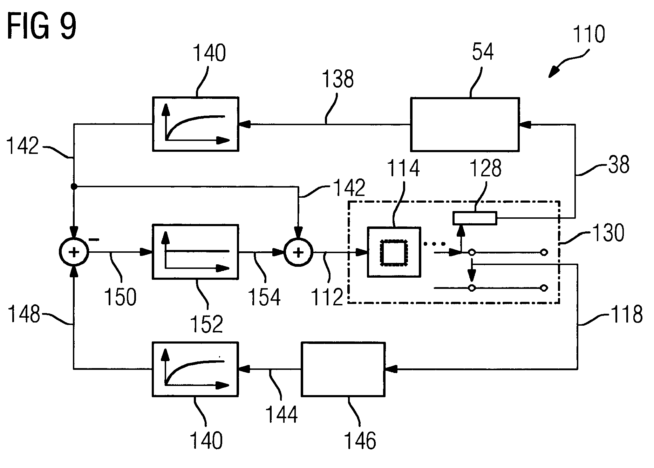

In FIG 9 ist das zweite Ausführungsbeispiel der Vorrichtung 110 gezeigt.

Im zweiten Ausführungsbeispiel kann das tiefpassgefilterte Leistungssteuersignal 142 vom tiefpassgefilterten Folgesteuersignal 148 abgezogen werden. Die resultierende Regeldifferenz 150 kann einem Regler 152 zugeführt werden. Ein resultierendes Regelsignal 154 kann unter Einsatz des in FIG 8 gezeigten Schalters 132 im Fehlerbetriebsmodus 136 in nicht gezeigter Weise direkt als Stellsignal 112 an den Ansteuerprozessor 114 ausgegeben werden. Auf diese Weise stellt das tiefpassgefilterte Folgesteuersignal 148 und damit die Netzspannung 118 eine Führungsgröße für die Wechselrichterspannung 52 dar. Im Regelbetriebsmodus 134 kann dann in zu FIG 8 analoger Weise das tiefpassgefilterte Leistungssteuersignal 142 als Stellsignal 112 ausgegeben werden.

Wie in FIG 9 gezeigt, kann das tiefpassgefilterte Leistungssteuersignal 142 aber auch auf das Regelsignal 154 aufgeschaltet werden. Dadurch geht aus dem Stellsignal 112 die einzustellende Wechselrichterspannung 52 direkt hervor.

Auf diese Weise kann zwischen dem Regelbetriebsbereich 134 und dem Fehlerbetriebsbereich 136 kontinuierlich ohne Sprünge umgeschaltet werden. Weist der Regler 152 beispielsweise ein P-Verhalten auf, so kann über den Regler 152 ein Gewichtungsfaktor für die Regeldifferenz 150 vorgegeben werden, der die Geschwindigkeit der Anpassung der Wechselrichterspannung 52 an die Netzspannung 118 vorgibt.

Ist der Verstärkungsfaktor exakt 0, so wird die Regeldifferenz 150 vollständig unterdrückt, so dass nur das tiefpassgefilterte Leistungssteuersignal 142 als Stellsignal 112 ausgegeben wird. Der Verstärkungsfaktor von exakt 0 ersetzt daher den Schalter 132 in der Stellung für den Regelbetriebsmodus 134.

Bei einem Verstärkungsfaktor von exakt 1 wird das tiefpassgefilterte Folgesteuersignal 148 ausgegebenen, da sich das tiefpassgefilterte Leistungssteuersignal 142 durch die negative Aufschaltung vor dem Regler 152 und die positive Aufschaltung nach dem Regler 152 bei diesem Verstärkungsfaktor aufhebt. Der Verstärkungsfaktor von exakt 1 ersetzt daher den Schalter 132 in der Stellung für den Fehlerbetriebsmodus 136.

Werden für den Verstärkungsfaktor des Reglers 152 Werte zwischen 0 und 1 gewählt kann über den Regler 152 damit kontinuierlich und ohne Sprünge vom Regelbetriebsmodus 134 in den Fehlerbetriebsmodus 136 und umgekehrt umgeschaltet werden.

Auf die Verwendung des Schalters 132 kann im dritten Ausführungsbeispiel optional vollständig verzichtet werden. Wird der Schalter dennoch nach dem Regler 152 verwendet, kann der Regler 152 auch unveränderlich parametriert und die Geschwindigkeit der Anpassung der Wechselrichterspannung 52 an die Netzspannung 118 fest voreingestellt werden.

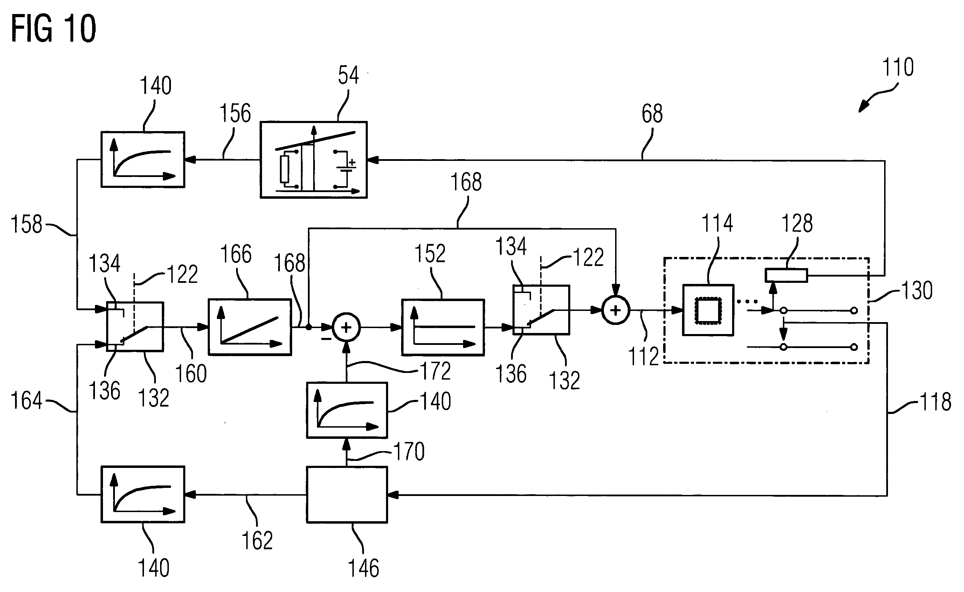

In FIG 10 ist das dritte Ausführungsbeispiel zur Berechnung des Stellsignals 126 gezeigt, das zur Einstellung der Frequenz der Wechselrichterspannung basierend auf der invertierten Wechselrichter-Wirkleistungsstatikkennlinie 38 herangezogen wird.

Im dritten Ausführungsbeispiel erfasst das Leistungsmessgerät 144 die Wirkleistung 68 der Wechselrichterleistung 38 basierend auf der Netzspannung 118, dem Wechselrichterstrom 100 und der Phasenverschiebung zwischen beiden Größen. Über die invertierte Wechselrichter-Wirkleistungsstatikkennlinie 54 wird die Ansteuerfrequenz bestimmt, die der Wechselrichter 34 zur Erfüllung seiner vorgegebenen Wirkleistungsstatik einstellen muss, um aktiv zur Frequenzerhaltung in der Netzspannung 118 beizutragen. Diese Ansteuerfrequenz wird nachstehend analog zu FIG 8 Leistungsfrequenz 156 bezeichnet. Die analog zu FIG 8 tiefpassgefilterte Leistungsfrequenz 158 über einen zu FIG 8 analogen Schalter 132 im Regelbetriebsmodus 134 als Stellfrequenz 160 für die Wechselrichterspannung 52 ausgegeben werden. Aus der PLL 146 lässt sich die aktuelle Netzfrequenz 162 entnehmen. Die analog zu FIG 8 tiefpassgefilterte Netzfrequenz 165 kann im Fehlerbetriebsmodus 136 als Stellfrequenz 160 für die Wechselrichterspannung 52 ausgegeben werden.

Über einen Integrator 166 kann die Stellfrequenz 160 in eine Wechselrichterspannungsphase 168 für die Wechselrichterspannung 52 umgewandelt werden. Aus der PLL 146 kann im Weiteren eine Netzspannungsphase 170 abgeleitet und tiefpassgefiltert werden. Die tiefpassgefilterte Netzspannungsphase 172 und die Wechselrichterspannungsphase 168 können dann im Weiteren genauso zum Stellsignal 112 verarbeitet werden, wie die tiefpassgefilterte Leistungsspannung 142 und die tiefpassgefilterte Folgespannung 148 in FIG 9.

In FIG 10 ist der Schalter 132 nach dem Regler 152 gezeigt, der es erlaubt, den Regler 152 unveränderlich vorzuparametrieren.

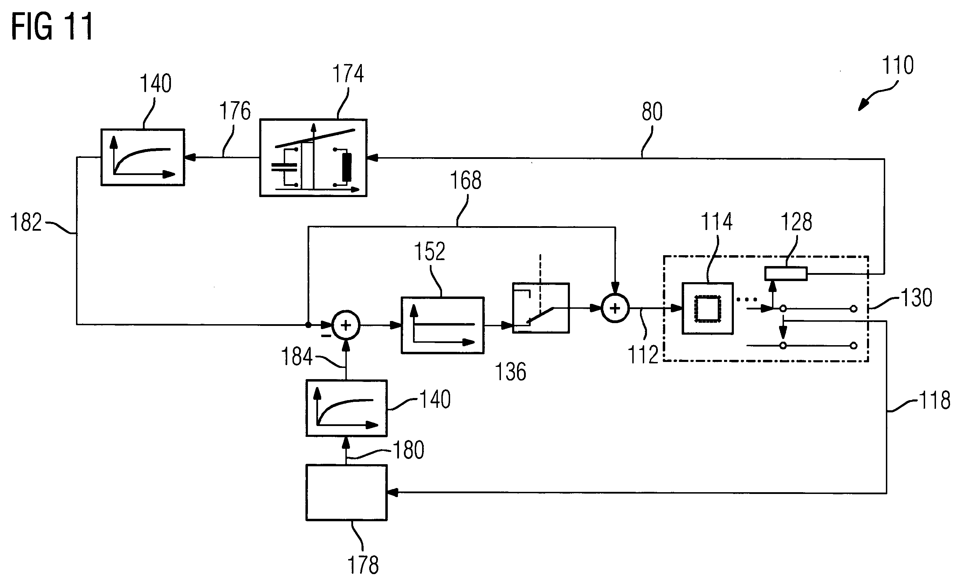

In FIG 11 ist das vierte Ausführungsbeispiel zur Berechnung des Stellsignals 112 gezeigt, das zur Einstellung des Effektivwertes der Wechselrichterspannung 52 basierend auf einer invertierten Wechselrichter-Blindleistungsstatikkennlinie 174 herangezogen wird.

Das Leistungsmessgerät 128 erfasst die vom Wechselrichter 34 abgegebene Blindleistung 80. Über die invertierte Wechselrichter-Blindleistungsstatikkennlinie 174 wird der notwendige Wechselrichtereffektivwert 176 für die Wechselrichterspannung 52 ausgegeben, damit der Wechselrichter 34 seiner vorgegebenen Blindleistungsstatik folgt. Der Wechselrichtereffektivwert 176 wird schließlich tiefpassgefiltert.

Über ein Spannungsmessgerät 178 kann der Netzspannungseffektivwert 180 bestimmt werden, der ebenfalls tiefpassgefiltert wird.

Der tiefpassgefilterte Wechselrichtereffektivwert 182 und der tiefpassgefilterte Netzspannungseffektivwert 184 werden dann im Weiteren genauso zum Stellsignal 112 verarbeitet, wie die tiefpassgefilterte Leistungsspannung 142 und die tiefpassgefilterte Folgespannung 148 in FIG 9.

Auch in FIG 11 ist der Schalter 132 nach dem Regler 152 gezeigt, der es erlaubt, den Regler 152 unveränderlich vorzuparametrieren.

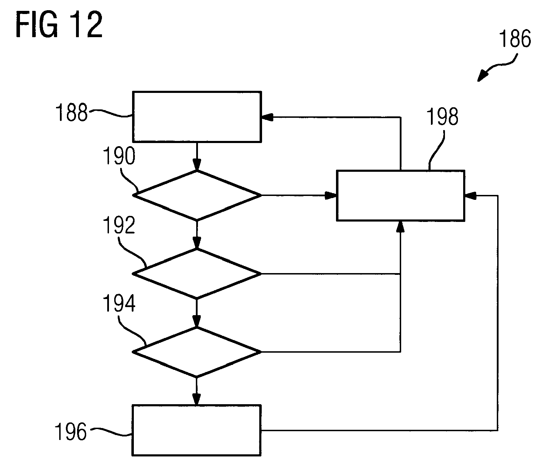

In FIG 12 ist beispielhaft ein Verfahren 186 zum Umschalten zwischen dem Regelbetriebsmodus 134 und dem Fehlerbetriebsmodus 136 dargestellt.

Das Verfahren beginnt im Schritt 188 damit, dass aus den invertierten Statikkennlinien 52, 174 der Effektivwert 176, die Frequenz 156 und die Phase 168 für die Wechselrichterspannung 52 bestimmt wird. In den Schritten 190, 192 und 194 werden die oben genannten Bedingungen zur Erzeugung des Zustandssignals 122 nacheinander abgeprüft.

Während in Schritt 190 geprüft wird, ob ein Kurzschluss vorliegt, wird in Schritt 192 geprüft, ob der Wechselrichter 34 noch nicht an seiner Wechselrichterstromgrenze $I_{ges}$ arbeitet und in Schritt 194, ob keine weiteren Energieerzeuger an das Leitungsnetz 2 angeschlossen sind.

Wird einer der Prüfschritte 190-194 bejaht, wird die Wechselrichterspannung 52 in Schritt 198 im Regelbetriebsmodus 134 basierend auf dem Effektivwert 176, der Frequenz 156 und der Phase 158 aus Schritt 188 erzeugt. Anderenfalls geht das Verfahren 186 in Schritt 196 in den Fehlerbetriebsmodus 136 über und erzeugt die Wechselrichterspannung 54 basierend auf dem Effektivwert 176, der Frequenz 156 und der Phase 158 der Netzspannung 118.

Innerhalb des Schrittes 196 kann geprüft werden, wann wieder eine der Bedingungen aus den Schritten 190 bis 194 erfüllt ist, um das Verfahren 186 in Schritt 198 zu überführen. Auf diese Weise wird die Wechselrichterspannung 52 im Fehlerbetriebsmodus 136 korrigiert, so dass der Wechselrichter 34 zeitnah wieder aktiv zur Erhaltung der Netzspannung 118 beitragen kann. Alternativ kann das Verfahren 186 nach einer bestimmten Zeit automatisch in Schritt 198 überführt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Synchronisieren einer Einspeisespannung (52) eines strombegrenzten Netzbildners (34) mit einer Netzspannung (118) eines weitere Netzbildner (6,8,10,12) mit Statikkennlinie (58,64) sowie elektrische Verbraucher (15) umfassenden elektrischen Energieversorgungsnetzes (2),

   - wobei für die Einspeisespannung (52) des Netzbildners (34) eine Eigenschaft, ausgewählt aus Frequenz (70), Phasenlage und Effektivwert (82), basierend auf einer Statikkennlinie (58,64) des Netzbildners (34) bestimmbar ist,
   - wobei die Statikkennlinie (58,64) des Netzbildners (34) die gewählte Eigenschaft der Einspeisespannung (52) des Netzbildners (34) einer Einspeiseleistung (38) des Netzbildners (34) gegenüberstellt,
   - wobei die Einspeiseleistung (38) des Netzbildners (34) durch das elektrische Energieversorgungsnetz (2) bei der Einspeisespannung (52) des Netzbildners (34) aufgenommen wird, **dadurch gekennzeichnet, dass**
   - die Eigenschaft der Einspeisespannung (52) des Netzbildners (34) an einen Wert (118) kleiner oder gleich einem Ist-Wert der entsprechenden Eigenschaft der aus den Statikkennlinien (58,64) der weiteren Netzbildner (6,8,10,12) resultierenden Netzspannung (118) angepasst wird, wenn aufgrund einer Grenze (Imax) für die Einspeiseleistung (38) des Netzbildners (34) die entsprechende Eigenschaft der Netzspannung nicht auf der zu der gewählten Eigenschaft der Einspeisespannung des Netzbildners gehörenden Statikkennlinie erreicht werden kann.

2. Verfahren nach Anspruch 1, wobei die Grenze (Imax) für die Einspeiseleistung (38) des Netzbildners (34) erreicht ist, wenn ein vom Netzbildner (34) maximal an das Energieversorgungsnetz (2) abgebbarer Strom erreicht und/oder die Einspeiseleistung des Netzbildners (34) negativ ist.

3. Verfahren nach einem der vorstehenden Ansprüche, wobei die Statikkennlinie (58,64) einen Fußpunkt aufweist, der zum Anpassen der Eigenschaft der Einspeisespannung (38) des Netzbildners (34) an den bestimmten Wert (118) verschoben wird.

4. Verfahren nach Anspruch 3, wobei zum Verschieben des Fußpunktes eine zugeführte Primärenergie reduziert wird, aus der die Einspeiseleistung (38) des Netzbildners (34) umgewandelt wird.

5. Verfahren nach Anspruch 3 oder 4, wobei der Fußpunkt der Statikkennlinie (58,64) auf seinen ursprünglichen Wert zurückgeschoben wird, wenn die Einspeisespannung (52) des Netzbildners (34) kleiner als die Grenze (Imax) für die Einspeiseleistung (38) des Netzbildners (34) ist.

6. Verfahren nach einem der vorstehenden Ansprüche, wobei die Statikkennlinie (58,64) linear ist und eine Steigung aufweist, die zum Anpassen der Eigenschaft der Einspeisespannung (52) des Netzbilders (34) an den bestimmten Wert (118) verändert wird.

7. Verfahren nach Anspruch 6, wobei die Steigung der Statikkennlinie (58,64) auf ihren ursprünglichen Wert zurückgesetzt wird, wenn die Einspeisespannung (52) des Netzbildners (34) kleiner als die Grenze (Imax) für die Einspeiseleistung (38) des Netzbildners (34) ist.

8. Verfahren nach einem der vorstehenden Ansprüche, wobei die Einspeisespannung (52) des Netzbildners (34) an das elektrische Energieversorgungsnetz nach dem Empfang eines vorbestimmten Einschaltsignals angelegt wird.

9. Verfahren nach Anspruch 8, wobei das Einschaltsignal ein Anstieg einer Eigenschaft der Netzspannung (118) ist.

10. Verfahren nach einem der Ansprüche 8 oder 9, wobei die Eigenschaft der Einspeisespannung (52) des Netzbildners (34) nach Empfang des vorbestimmten Signals basierend auf einem Sollverlauf folgegeregelt wird.

11. Verfahren nach Anspruch 10, wobei die folgegeregelte Eigenschaft der Einspeisespannung (52) des Netzbildners (34) der Effektivwert der Einspeisespannung (52) des Netzbildners (34) ist.

12. Verfahren nach Anspruch 10 oder 11, wobei der Sollverlauf rampenförmig ist.

13. Verfahren nach Anspruch 12, wobei eine zeitliche Länge der Rampenform kürzer ist, als eine Übertragungsdauer des Einschaltsignals.

**14.** Steuervorrichtung zur Durchführung eines Verfahrens nach einem der vorstehenden Ansprüche.

**15.** Netzbildner (34) für ein elektrisches Energieversorgungsnetz (2) mit einer Netzspannung (118), umfassend einen elektrischen Energieerzeuger (34) zum Abgeben einer Einspeisespannung (52) in das elektrische Energieversorgungsnetz (2) und eine Steuervorrichtung nach Anspruch 14.

**16.** Netzbildner (34) nach Anspruch 15, umfassend einen Energiespeicher zum Aufnehmen einer elektrischen Energie aus dem Energieversorgungsnetz (2).

**17.** Netzbildner nach Anspruch 15 oder 16, wobei der Energieerzeuger (34) ein Wechselrichter ist, der ausgebildet ist, elektrische Energie aus einer Gleichspannungsquelle (6) in die Einspeisespannung (38) umzuwandeln.

**18.** Elektrisches Energieversorgungsnetz (2) umfassend Netzbildner (12,34) zum Abgeben von elektrischen Einspeisespannungen (50,52) zur Bildung einer Netzspannung (118) und elektrische Verbraucher (15) zum Aufnehmen der Netzspannung (118), wobei wenigstens ein Netzbildner (34) nach einem der Ansprüche 16 bis 18 ausgebildet ist.

**19.** Elektrisches Energieversorgungsnetz (2), wobei alle Netzbildner (12,34) nach einem der Ansprüche 16 bis 18 ausgebildet sind.

**Claims**

**1.** Method for synchronizing a feed voltage (52) of a current-limited network former (34) with a network voltage (118) of an electrical energy supply network (2) comprising further network formers (6, 8, 10, 12) with static characteristic curves (58, 64) and electrical consumers (15),

- wherein a property of the feed voltage (52) of the network former (34), selected from frequency (70), phase position and root-mean-square value (82), can be determined on the basis of a static characteristic curve (58,64) of the network former (34),
- wherein the static characteristic curve (58,64) of the network former (34) compares the selected property of the feed voltage (52) of the network former (34) to a feed power (38) of the network former (34),
- wherein the feed power (38) of the network former (34) is received by the electrical energy supply network (2) at the feed voltage (52) of the network former (34), **characterised in that**

- the property of the feed voltage (52) of the network former (34) is adjusted to a value (118) smaller than or equal to an actual value of the corresponding property of the network voltage (118) resulting from the static characteristic curves (58, 64) of the further network formers (6, 8, 10, 12) when, due to a limit ($I_{max}$) for the feed power (38) of the network former (34), the corresponding property of the network voltage cannot be reached on the static characteristic curve belonging to the selected property of the feed voltage of the network former.

**2.** Method according to claim 1, wherein the limit ($I_{max}$) for the feed power (38) of the network former (34) is reached when the maximum current that can be supplied by the network former (34) to the supply network (2) is reached and/or the feed power of the network former (34) is negative.

**3.** Method according to one of the preceding claims, wherein the static characteristic curve (58,64) has a base that is shifted to adjust the property of the feed voltage (38) of the network former (34) to the specific value (118).

**4.** Method according to claim 3, wherein, to displace the base, a supplied primary energy from which the feed power (38) of the network former (34) is converted is reduced.

**5.** Method according to claim 3 or 4, wherein the base of the static characteristic curve (58,64) is returned to its original value when the feed voltage (52) of the network former (34) is smaller than the limit ($I_{max}$) for the feed power (38) of the network former (34).

**6.** Method according to one of the preceding claims, wherein the static characteristic curve (58,64) is linear and has a pitch which is changed to adjust the property of the feed voltage (52) of the network former (34) to the specific value (118).

**7.** Method according to claim 6, wherein the pitch of the static characteristic curve (58,64) is reset to its original value when the feed voltage (52) of the network former (34) is smaller than the limit ($I_{max}$) for the feed power (38) of the network former (34).

**8.** Method according to one of the preceding claims, wherein the feed voltage (52) of the network former (34) is applied to the electrical energy supply network after the reception of a predetermined switch-on signal.

**9.** Method according to claim 8, wherein the switch-on signal is an increase of a property of the network voltage (118).

**10.** Method according to one of claims 8 or 9, wherein the property of the feed voltage (52) of the network former (34) is sequentially controlled after the reception of the predetermined signal on the basis of a desired curve.

**11.** Method according to claim 10, wherein the sequentially controlled property of the feed voltage (52) of the network former (34) is the root-mean-square value of the feed voltage (52) of the network former (34).

**12.** Method according to claim 10 or 11, wherein the desired curve is ramp shaped.

**13.** Method according to claim 12, wherein a temporal length of the ramp shape is shorter than a transmission time of the switch-on signal.

**14.** Control device for the performance of a method according to one of the preceding claims.

**15.** Network former (34) for an electrical energy supply network (2) with a network voltage (118) comprising an electrical energy generator (34) for supplying a feed voltage (52) into the electrical energy supply network (2) and a control device according to claim 14.

**16.** Network former (34) according to claim 15, comprising an energy store for receiving electrical energy from the supply network (2).

**17.** Network former according to claim 15 or 16, wherein the energy generator (34) is an inverter which is embodied to convert electrical energy from a DC source (6) into the feed voltage (38).

**18.** Electrical energy supply network (2) comprising network formers (12, 34) for supplying electrical feed voltages (50, 52) for forming a network voltage (118) and electrical consumers (15) for receiving the network voltage (118), wherein at least one network former (34) is embodied according to one of claims 16 to 17.

**19.** Electrical energy supply network (2), wherein all network formers (12,34) are embodied according to any one of claims 16 to 18.

**Revendications**

**1.** Procédé de synchronisation d'une tension (52) d'alimentation d'un formeur (34) de réseau, limité en tension, en une tension (118) de réseau d'un autre formeur (6, 8, 10, 12) de réseau à courbe (58,64) caractéristique statique ainsi que d'un réseau (2) d'alimentation en énergie électrique comprenant des consommateurs (15) électriques,

- dans lequel on peut définir, pour la tension (42) d'alimentation du formeur (34) de réseau, une propriété choisie parmi la fréquence (70) la position en phase et la valeur (82) efficace, reposant sur une courbe (58, 64) caractéristique statique du formeur (34) de réseau,
- dans lequel la courbe (58, 64) caractéristique statique du formeur (34) de réseau compare la propriété choisie de la tension (52) d'alimentation du formeur (34) de réseau à une puissance (38) d'alimentation du formeur (34) de réseau,
- dans lequel on absorbe la puissance (38) d'alimentation du formeur (34) de réseau par le réseau (2) d'alimentation en énergie électrique à la tension (52) d'alimentation du formeur (34) de réseau,

**caractérisé en ce que**
- on adapte la propriété de la tension (52) d'alimentation du formeur (34) de réseau à une valeur inférieure ou égale à une valeur réelle de la propriété correspondante de la tension (118) du réseau résultant des courbes (58,64) caractéristiques statiques de l'autre formeur (6, 8, 12) de réseau, si, sur la base d'une limite (Imax) de la puissance (38) d'alimentation du formeur (34) de réseau, la propriété correspondante de la tension du réseau ne peut pas être atteinte sur la courbe caractéristique statique appartenant à la propriété choisie de la tension d'alimentation du formeur de réseau.

**2.** Procédé suivant la revendication 1, dans lequel la limite (Imax) de la puissance (38) d'alimentation du formeur (34) de réseau est atteinte, si un courant pouvant être cédé au maximum par le formeur (34) de réseau au réseau (2) d'alimentation en énergie est atteint et/ou si la puissance d'alimentation du formeur (34) de réseau est négative.

**3.** Procédé suivant l'une des revendications précédentes, dans lequel la courbe (58, 64) caractéristique statique a un pied que l'on déplace pour adapter la propriété de la tension (38) d'alimentation du formeur (34) de réseau à la valeur (118) définie.

**4.** Procédé suivant la revendication 3, dans lequel, pour déplacer le pied, on réduit une énergie primaire apportée, à partir de laquelle la puissance (38) d'alimentation du formeur (34) de réseau est transformée.

**5.** Procédé suivant la revendication 3 ou 4, dans lequel on ramène le pied de la courbe (58, 64) caractéristique statique à sa valeur d'origine, si la tension (52) d'alimentation du formeur (34) de réseau est plus basse que la limite (Imax) de la puissance (38) d'alimentation du formeur (34) de réseau.

**6.** Procédé suivant l'une des revendications précédentes, dans lequel la courbe (58, 64) caractéristique statique est linéaire et a une pente que l'on modifie pour adapter la propriété de la tension (52) d'alimentation du formeur (34) de réseau à la valeur (118) définie.

**7.** Procédé suivant la revendication 6, dans lequel on ramène la pente de la courbe (58, 64) caractéristique statique à sa valeur d'origine, si la tension (52) d'alimentation du formeur (34) de réseau est plus basse que la limite (Imax) de la puissance (38) d'alimentation du formeur (34) de réseau.

**8.** Procédé suivant l'une des revendications précédentes, dans lequel on applique la tension (52) d'alimentation du formeur (34) de réseau au réseau d'alimentation en énergie électrique après la réception d'un signal de connexion défini à l'avance.

**9.** Procédé suivant la revendication 8, dans lequel le signal de connexion est une augmentation d'une propriété de la tension (118) du réseau.

**10.** Procédé suivant la revendication 8 ou 9, dans lequel on régule la propriété de la tension (52) d'alimentation du formeur (34) de réseau après la réception du signal défini à l'avance, sur la base d'une courbe de consigne.

**11.** Procédé suivant la revendication 10, dans lequel la propriété régulée de la tension (52) d'alimentation du formeur (34) de réseau est la valeur efficace de la tension (52) d'alimentation du formeur (34) de réseau.

**12.** Procédé suivant la revendication 10 ou 11, dans lequel la courbe de consigne est en forme de rampe.

**13.** Procédé suivant la revendication 12, dans lequel une longueur temporelle de la forme en rampe est plus petite qu'une durée de transmission du signal de connexion.

**14.** Dispositif de commande pour effectuer un procédé suivant l'une de revendication précédente.

**15.** Formeur (34) de réseau pour un réseau (2) d'alimentation en énergie électrique ayant une tension (118) de réseau, comprenant un générateur (34) d'énergie électrique pour appliquer une tension (52) d'alimentation au réseau (2) d'alimentation en énergie électrique et un dispositif de commande suivant la revendication 14.

**16.** Formeur (34) de réseau suivant la revendication 15, comprenant un accumulateur d'énergie pour absorber une énergie électrique du réseau (2) d'alimentation en énergie.

**17.** Formeur (34) de réseau suivant la revendication 15 ou 16, dans lequel le générateur (34) d'énergie est un onduleur constitué pour transformer de l'énergie électrique d'une source (6) de tension continue en la tension (38) d'alimentation.

**18.** Réseau (2) d'alimentation en énergie électrique comprenant des formeurs (12, 34) de réseau pour appliquer des tensions (50, 52) d'alimentation électriques pour la formation d'une tension (118) du réseau et des consommateurs (15) électriques pour absorber la tension (118) du réseau, au moins un formeur (34) de réseau étant constitué suivant l'une des revendications 16 à 17.

**19.** Réseau (2) d'alimentation en énergie électrique, dans lequel tous les formeurs (12, 34) de réseau sont constitués suivant l'une des revendications 16 à 18.

FIG 1

FIG 2

FIG 3

FIG 4

FIG 5

FIG 6

FIG 7

FIG 8

EP 2 632 012 B1

**FIG 9**

20

FIG 10

EP 2 632 012 B1

# FIG 11

EP 2 632 012 B1

# FIG 12

186

188

190

192

194

196

198

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10210099 A1
- DE 102006059199 B3